# EUROPÄISCHE PATENTSCHRIFT

(11) **EP 3 817 840 B1**
(45) Veröffentlichungstag und Bekanntmachung des Hinweises auf die Patenterteilung: **30.10.2024**
(21) Anmeldenummer: 19737493.7
(22) Anmeldetag: 02.07.2019
(51) Int. Cl.: B01D 53/86, A23F 5/04

(54) **VERWENDUNG EINES KATALYSATORS ZUR SELEKTIVEN KATALYTISCHEN OXIDATION VON STICKSTOFFHALTIGEN ORGANISCHEN VERBINDUNGEN**
USE OF A CATALYST FOR THE SELECTIVE CATALYTIC OXIDATION OF NITROGEN-CONTAINING ORGANIC COMPOUNDS
UTILISATION D'UN CATALYSEUR POUR L'OXYDATION CATALYTIQUE SÉLECTIVE DE COMPOSÉS ORGANIQUES AZOTÉS

(30) Priorität: 03.07.2018 DE 102018116058
(43) Veröffentlichungstag der Anmeldung: 12.05.2021
(73) Patentinhaber: Interkat Catalyst GmbH, 53639 Königswinter (DE)
(72) Erfinder: IRETSKAYA, Svetlana, 53639 Königswinter (DE); ZIRPEL, Kevin, 66125 Saarbrücken (DE); HELMER, Olaf, 53757 Sankt Augustin (DE); ZIMMERMANN, Sebastian, 53117 Bonn (DE)
(74) Vertreter: karo IP
(86) Internationale Anmeldenummer: PCT/EP2019/067652
(87) Internationale Veröffentlichungsnummer: WO 2020/007815

(56) Entgegenhaltungen:
- EP-A1- 1 197 259
- WO-A1-2012/085157
- WO-A1-2017/064654
- DE-A1- 102011 012 799
- US-A1- 2016 001 228

## Beschreibung

Die Erfindung betrifft eine Verwendung eines Katalysators zur selektiven katalytischen Oxidation von stickstoffhaltigen organischen Verbindungen, nämlich im Abgas einer Kaffeeröstvorrichtung bzw. eines Kaffeeröstprozesses. Auch im Zusammenhang mit Kaffeeröstvorgängen sind Emissionsgrenzwerte, etwa für VOC's (flüchtige organische Verbindungen), Kohlenstoffmonoxid und Stickoxide einzuhalten. Hierzu kann eine Abgasnachbehandlung des Abgases aus den Röstvorgängen beitragen. Vorgeschlagen wurde bereits eine Abgasnachbehandlung von Abgas aus Röstvorgängen mit (edelmetallhaltigen) Oxidationskatalysatoren. Entsprechende Oxidationskatalysatoren tragen dazu bei, organische Verbindungen und Kohlenstoffmonoxid zu oxidieren.

Ein Nachteil solcher Oxidationskatalysatoren ist jedoch die Bildung von Stickoxiden (NOx) durch die Oxidation stickstoffhaltiger organischer Verbindungen. Um diesem Nachteil entgegenzuwirken, wurden bisher verschiedene Möglichkeiten vorgeschlagen. Eine Möglichkeit besteht in der selektiven nicht katalytischen Reduktion (sog. SNCR-Technologie), die sehr energieaufwendig bei hohen Temperaturen mit Hilfe eines Reduktionsmittels, wie etwa Ammoniak oder Harnstoff erfolgt. Diese ist allerdings platzaufwändig sowie unpraktisch für kleinere Anlagen und lässt sich daher nicht immer realisieren. Eine weitere Möglichkeit besteht darin, zusätzlich einen Katalysator zur selektiven katalytischen Reduktion (sog. SCR-Technologie) einzusetzen. Dieser dient der Reduktion von Stickoxiden (NOx) im Abgas, wobei die chemische Reaktion am SCR-Katalysator selektiv ist, d.h., dass die Stickoxide (NO, NO₂) bevorzugt zu Stickstoff reduziert werden, während unerwünschte Nebenreaktionen wie die Bildung von Lachgas (N₂O) weitgehend unterdrückt werden. Nachteile der SCR-Technologie sind jedoch darin zu sehen, dass diese zum einen eine ggf. aufwendige Prozesssteuerung erforderlich macht und zum anderen hierzu ein zusätzliches Additiv bzw. Reduktionsmittel, wie etwa Harnstoff oder Ammoniak notwendig ist. Solche Stoffe sind jedoch in der Lebensmittelindustrie grundsätzlich unerwünscht, sodass deren Einsatz in diesem Zusammenhang möglichst zu vermeiden ist.

Aus der WO 2017/064654 A1 ist ein Verfahren zur Behandlung der Abgase einer Kaffeeröstanlage bekannt.

Hiervon ausgehend ist es Aufgabe der vorliegenden Erfindung, die mit Bezug auf den Stand der Technik geschilderten Probleme zumindest teilweise zu lösen. Insbesondere soll eine Verwendung eines Katalysators zur Behandlung von stickstoffhaltigen organischen Verbindungen im Abgas (insbesondere einer Kaffeeröstvorrichtung) angegeben werden, die zumindest dazu beiträgt, dass eine katalytische Umsetzung der stickstoffhaltigen organischen Verbindungen möglichst ohne (beachtliche) Bildung von Stickoxiden und ohne Zugabe eines Additives (insbesondere Reduktionsmittels, wie etwa Harnstoff oder Ammoniak) möglich ist.

Hierzu trägt eine Verwendung eines Katalysators zur selektiven katalytischen Oxidation von stickstoffhaltigen organischen Verbindungen zur Nachbehandlung eines Abgases eines Kaffeeröstprozesses bei, wobei die Bildung von Stickoxiden im Abgas zumindest teilweise unterbunden wird, wobei der Katalysator umfasst:
- eine erste Komponente, umfassend zumindest ein Element der Gruppe bestehend aus Kupfer, Mangan, Eisen oder eine Mischung davon, wobei die erste Komponente 1 bis 15 Gewichtsprozent des Katalysators bildet;
- eine zweite Komponente umfassend Cer, wobei die zweite Komponente 2 bis 25 Gewichtsprozent des Katalysators bildet; und
- eine dritte Komponente, umfassend zumindest ein Element der Gruppe bestehend aus einem Zeolith, einem Sauerstoffspeichermaterial, einem anorganischen Oxid oder eine Mischung davon, wobei die dritte Komponente 5 bis 95 Gewichtsprozent des Katalysators bildet.

Die hier vorgeschlagene Lösung erlaubt den besonderen Vorteil, dass eine katalytische Umsetzung der stickstoffhaltigen organischen Verbindungen, insbesondere aus dem Abgas von (Kaffee-)Röstprozessen, möglichst ohne Bildung von Stickoxiden und ohne Zusatz eines Reduktionsmittels, wie etwa Harnstoff oder Ammoniak möglich ist. Dies wird insbesondere dadurch erreicht, dass die hier vorgeschlagene Kombination von erster Komponente, zweiter Komponente und dritter Komponente in vorteilhafter Weise dazu beiträgt, dass die Oxidation selektiv ausgeführt wird, was insbesondere bedeutet, dass bei der Oxidation von stickstoffhaltigen organischen Verbindungen der Stickstoff gezielt nicht oxidiert wird, wodurch die Bildung ungewünschter Stickoxide (NOx) praktisch vermieden werden kann. Dadurch kann eine (sich an herkömmliche Oxidationskatalysatoren anschließende) Reduktion von Stickoxiden vorteilhaft entfallen, sodass kein Reduktionsmittel verwendet werden muss.

Der Katalysator ist insbesondere zur selektiven katalytischen Oxidation von stickstoffhaltigen organischen Verbindungen, insbesondere stickstoffhaltigen organischen Kohlenwasserstoffen, eingerichtet. Dies bedeutet mit anderen Worten insbesondere, dass die chemische Reaktion am Katalysator selektiv ist. Hierbei werden bevorzugt Kohlenstoffgruppen innerhalb (organischer Kohlenwasserstoffe zu Kohlenmonoxid (CO) und Kohlendioxid (CO₂) oxidiert, während unerwünschte Nebenreaktionen wie insbesondere die Totaloxidation von Stickstoff, beispielsweise zu Stickstoffoxid (NO) oder Stickstoffdioxid (NO₂), weitgehend oder nahezu vollständig unterdrückt werden.

Insbesondere ist der Katalysator dazu eingerichtet, nur Kohlenstoffgruppen und/oder nur sich von Stickstoff unterscheidende chemische Elemente zu oxidieren. Dies bedeutet mit anderen Worten insbesondere, dass der Katalysator derart selektiv ist, dass er (insbesondere innerhalb einer stickstoffhaltigen organischen Verbindung bzw. bei der Oxidation einer stickstoffhaltigen organischen Verbindung) nur Kohlenstoffgruppen innerhalb einer organischen Verbindung zu CO und CO₂ oxidiert und/oder nur bestimmte chemische Elemente, insbesondere sich von Stickstoff unterscheidende chemische Elemente partiell oder vollständig oxidiert. Dies bedeutet mit noch anderen Worten insbesondere, dass der Katalysator derart selektiv ist, dass er stickstoffhaltige Molekülgruppen innerhalb der Kohlenwasserstoffkette selektiv zu Stickstoff und nicht zu NOx oxidiert, insbesondere bei der Oxidation einer stickstoffhaltigen organischen Verbindung den Stickstoff nicht zu NOx oxidiert.

Ein Beispiel für eine stickstoffhaltige organische Verbindung, die im Zusammenhang mit Röstvorgängen eine Rolle spielen kann, ist Koffein. Koffein hat die chemische Summenformel C₈H₁₀N₄O₂. Nachfolgend wird am Beispiel von Koffein eine selektive Oxidation dieser stickstoffhaltigen organischen Verbindung anhand einer entsprechenden Reaktionsgleichung veranschaulicht:

2 C₈H₁₀N₄O₂ + 19 O₂ → 4 N₂ + 16 CO₂ + 10 H₂O

Der Katalysator wird bevorzugt zur selektiven katalytischen Oxidation bzw. zum selektiven katalytischen Oxidieren von stickstoffhaltigen organischen Verbindungen im Abgas einer Kaffeeröstvorrichtung verwendet. Das Abgas der Kaffeeröstvorrichtung betrifft hierbei regelmäßig die Abluft aus den Röstvorgängen. Diese Abluft enthält in der Regel stickstoffhaltige organische Verbindungen, wie etwa Koffein.

Röstkaffe enthält ca. 835 flüchtige Verbindungen. Diese können in 21 Verbindungsklassen eingeteilt werden. Zu diesen Verbindungsklassen zählen aliphatische Kohlenwasserstoffe (mit 45 flüchtigen Verbindungen), aromatische Kohlenwasserstoffe (mit 35 flüchtigen Verbindungen), Alkohole (mit 25 flüchtigen Verbindungen), Aldehyde (mit 37 flüchtigen Verbindungen), Ketone (mit 85 flüchtigen Verbindungen), Säuren (mit 28 flüchtigen Verbindungen), Ester (mit 33 flüchtigen Verbindungen), Amine (mit 13 flüchtigen Verbindungen), Pyrrole (mit 72 flüchtigen Verbindungen), Pyridine (mit 20 flüchtigen Verbindungen), Pyrazine (mit 89 flüchtigen Verbindungen), Chinoxaline (mit 11 flüchtigen Verbindungen), Furanone (mit 128 flüchtigen Verbindungen), Oxazole (mit 35 flüchtigen Verbindungen), Thiole (mit 7 flüchtigen Verbindungen), Sulfide (mit 13 flüchtigen Verbindungen), Disulfide (mit 10 flüchtigen Verbindungen), Thiophene (mit 28 flüchtigen Verbindungen), Thiazole (mit 27 flüchtigen Verbindungen), Phenole (mit 49 flüchtigen Verbindungen) und sonstige (mit 45 flüchtigen Verbindungen).

Der Katalysator (zur selektiven katalytischen Oxidation) umfasst mindestens drei Komponenten, nämlich zumindest eine erste Komponente, eine zweite Komponente und eine dritte Komponente. Darüber hinaus kann der Katalysator grundsätzlich auch noch weitere Komponenten umfassen. Nach einer vorteilhaften Ausgestaltung besteht der Katalysator (nur) aus der ersten Komponente, der zweiten Komponente und der dritten Komponente.

Der Katalysator hat eine erste Komponente, umfassend zumindest ein Element der Gruppe bestehend aus Kupfer, Mangan, Eisen oder eine Mischung davon. Dies bedeutet mit anderen Worten insbesondere, dass die erste Komponente Kupfer, Mangan und/oder Eisen umfasst und/oder eine Mischung von Kupfer, Mangan und/oder Eisen umfasst. Als erste Komponente werden besonders bevorzugt Mangan und/oder Kupfer verwendet.

Die chemischen Elemente aus der ersten Komponentengruppe weisen eine (gegenüber Edelmetallen) milde Oxidationsaktivität auf und können daher besonders gut für die partielle Oxidation der stickstoffhaltigen organischen Verbindungen im Vergleich zu Edelmetallen, die zu ihrer vollständigen Oxidation führen würden, geeignet sein.

Der Katalysator hat weiterhin eine zweite Komponente, umfassend Cer.

Die Elemente der zweiten Komponente können Mischoxide mit Elementen der ersten Komponente bilden, welche insbesondere vorteilhaft zur selektiven Oxidation sind.

Der Katalysator hat zudem eine dritte Komponente, umfassend zumindest ein Element der Gruppe bestehend aus einem Zeolith, einem Sauerstoffspeichermaterial, einem anorganischen Oxid oder eine Mischung davon. Dies bedeutet mit anderen Worten insbesondere, dass die dritte Komponente einen Zeolith, ein Sauerstoffspeichermaterial und/oder ein anorganisches Oxid umfasst und/oder eine Mischung von einem Zeolith, einem Sauerstoffspeichermaterial und/oder einem anorganischen Oxid umfasst.

Die dritte Komponente dient als Träger für die aktiven Metalle der ersten Komponente und/oder zweiten Komponente.

Die komplexe Struktur von Zeolithen als Träger für die aktiven Metalle kann dazu beitragen, eine selektive Oxidation von stickstoffhaltigen organischen Materialien zu erreichen. Diese Wirkungsweise wird auch als "shape selectivity" bezeichnet.

Das Sauerstoffspeichermaterial unterstützt die Oxidation von organischen Materialien, die an der Katalysatoroberfläche adsorbiert sind, indem es ein hochreaktives Sauerstoffatom aus dem Gitter bereitstellt.

Als dritte Komponente wird besonders bevorzugt ein Zeolith verwendet. Als dritte Komponente kann darüber hinaus auch eine Mischung von Zeolithen verwendet werden. Der Zeolith oder die Mischung von Zeolithen kann in der H-Form, der Na-Form, der Ammoniumform oder einer Mischung davon vorliegen. Besonders bevorzugt liegt der Zeolith oder die Mischung von Zeolithen in der H-Form vor.

Alternativ oder kumulativ kann als dritte Komponente bevorzugt ein Sauerstoffspeichermaterial verwendet werden. Ein Sauerstoffspeichermaterial kann ein Material auf Cer-Oxid-Basis umfassen. Ein Sauerstoffspeichermaterial kann Sauerstoff aus sauerstoffreichen Zufuhrströmen aufnehmen und (den gespeicherten) Sauerstoff (wieder) an sauerstoffarme Zufuhrströme abgeben. Das Sauerstoffspeichermaterial kann auch ein Träger für die erste Komponente und/oder die zweite Komponente sein.

Besonders bevorzugt ist die Verwendung einer Mischung aus einem Zeolith und einem Sauerstoffspeichermaterial.

Alternativ oder kumulativ kann als dritte Komponente bevorzugt ein anorganisches Oxid verwendet werden. Bei dem anorganischen Oxid kann es sich beispielsweise um zumindest eines der Gruppe bestehend aus Aluminiumoxid, Siliciumdioxid, Titandioxid und Siliciumdioxid-Aluminiumoxid handeln. Darüber hinaus kann das anorganische Oxid als feste Lösung, als Verbundstoff und/oder als Mischungen aus der genannten Gruppe von anorganischen Oxiden vorliegen. Ein bevorzugt verwendetes anorganisches Oxid ist Siliziumoxid.

Die anorganischen Oxide können beispielsweise als Teil eines Washcoats verwendet werden. Anorganische Oxide können in vorteilhafter Weise die Rheologie von wässrigen Aufschlämmungen für den (optionalen) Washcoat verbessern und/oder die Washcoat-Haftung an einem Substrat verbessern, insbesondere wenn der Katalysator auf einen Monolithen aufgetragen werden soll.

Die erste Komponente bildet (etwa) 1 bis (etwa) 15 Gewichtsprozent des Katalysators. Bevorzugt bildet die erste Komponente 2 bis 10 Gewichtsprozent des Katalysators.

Die Gewichtsprozentangaben beziehen sich auf die Trockenmasse des Katalysators.

Mit dem angegebenen Minimum kann erreicht werden, dass noch ausreichend aktive Metalle auf der Oberfläche des Katalysators vorhanden sind, um genügend aktive Stellen für die Adsorption und die katalytische Reaktion bereitzustellen. Die maximale Menge sollte basierend auf der verfügbaren Oberfläche des Trägers bestimmt werden. Ein zu großer Anteil an aktiven Metallen der ersten Komponente könnte zu einer reduzierten Dispergierung und damit zu einem schnellen Sintern der aktiven Metalle während des Einsatzes und damit zum Aktivitätsverlust führen.

Die zweite Komponente bildet (etwa) 2 bis (etwa) 25 Gewichtsprozent des Katalysators. Bevorzugt bildet die zweite Komponente 5 bis 20 Gewichtsprozent des Katalysators.

Ein (vor)bestimmbarer Verhältnisbereich zwischen der ersten Komponente und der zweiten Komponente kann zu einer besseren Aktivität des Katalysators führen. Daher sollte die Menge der zweiten Komponente in dem Katalysator von der Menge der ersten Komponente abhängen. Beispielsweise kann die zweite Komponente mit einem größeren, etwa gleichen oder kleineren Gewichtsanteil als die erste Komponente vorgesehen sein.

Die dritte Komponente bildet (etwa) 5 bis (etwa) 95 Gewichtsprozent des Katalysators. Bevorzugt bildet die dritte Komponente 50 bis 85 Gewichtsprozent des Katalysators.

Die dritte Komponente liefert eine Oberfläche für eine gute Dispersion der gewählten aktiven Metalle (Kombination der ersten Komponente und zweiten Komponente). Daher ist ein angepasster Verhältnisbereich zwischen der dritten Komponente und der Summe der ersten Komponente und zweiten Komponenten zu wählen.

Nach einer vorteilhaften Ausgestaltung wird vorgeschlagen, dass die dritte Komponente einen Zeolith umfasst. In diesem Zusammenhang ist es besonders bevorzugt, wenn der Zeolith einer aus der Gruppe bestehend aus EMC-2, Beta-Zeolith, Mordenit, Faujasit, AIPO-5, Theta-1, ZSM-Zeolith, MCM-Zeolith, Ferrierit oder eine Mischung davon ist. Bevorzugt wird ZSM-5 als Zeolith verwendet.

Zeolithe, die im Gerüst große Ringe (8 oder mehr T-Atome) enthalten, können für die Anwendung besonders vorteilhaft sein ("*shape selectivity*")*.*

Der Katalysator wird insbesondere so verwendet, dass die Bildung von Stickoxiden im Abgas zumindest teilweise unterbunden wird.

Der Katalysator wird insbesondere so verwendet, dass für die Reaktion mit dem Abgas kein Additiv zugegeben wird. Das meint insbesondere, dass das "unbehandelte" Abgas direkt bzw. ohne Hinzufügen eines abgasexternen Fluids oder Feststoffs dem Katalysator zugeführt wird.

Die Verwendung ist so bevorzugt, dass das (gesamte) Abgas im ersten (katalytischen) Behandlungsschritt dem Katalysator zugeführt wird.

Nach einer vorteilhaften Ausgestaltung wird vorgeschlagen, dass zusätzlich zu dem Katalysator zur selektiven katalytischen Oxidation ein Oxidationskatalysator zur Nachbehandlung des Abgases der Kaffeeröstvorrichtung verwendet wird.

In der Regel kommt der Oxidationskatalysator dabei insbesondere erst (räumlich und/oder zeitlich) nach dem Katalysator zur selektiven katalytischen Oxidation in Kontakt mit dem Abgas. Das bedeutet mit anderen Worten insbesondere, dass der Oxidationskatalysator stromab des Katalysators zur selektiven katalytischen Oxidation angeordnet ist. Der Oxidationskatalysator wird insbesondere dazu verwendet, im Kohlenmonoxid im (vorbehandelten) Abgas zu oxidieren.

Als Beispiel für einen solchen Oxidationskatalysator sei hier einer angegeben, der Platin (Pt) oder/und Palladium (Pd) als Träger auf einem anorganischen Oxid (z.B. Aluminiumoxid, Titanoxid, oder dergleichen) umfasst.

Grundsätzlich wird der Katalysator ohne Zusatz eines Additivs, z. B. eines Reduktionsmittels für die SCR-Reaktion verwendet. Bei dem Reduktionsmittel handelt es sich beispielsweise um Harnstoff oder Ammoniak. In diesem Zusammenhang wird Harnstoff auch als sog. Reduktionsmittelvorläufer bezeichnet, aus dem das eigentliche Reduktionsmittel Ammoniak generiert werden kann. Der Katalysator kommt insbesondere deshalb ohne ein solches Reduktionsmittel aus, da der Katalysator (nur) zur selektiven Oxidation (und nicht zur Reduktion) dient.

Bevorzugt wird der Katalysator bei einer Abgastemperatur größer oder gleich 350°C [Grad Celsius] verwendet. Besonders bevorzugt wird der Katalysator bei einer Abgastemperatur größer oder gleich 400°C verwendet. Für den Fall der Kaffeeröstung kann vorgesehen sein, dass das Abgas zunächst noch erhitzt wird, bevor es dem Katalysator zugeführt wird.

In einer Ausführungsform kann der Katalysator in eine Form, wie etwa eine Wabenstruktur, Pellets oder Kügelchen geformt sein. Bevorzugt ist der Katalysator auf eine metallische oder keramische Wabenstruktur aufgebracht. In einer alternativen Ausführungsform kann der Katalysator zu einem Extrudat, insbesondere Monolith extrudiert sein.

Darüber hinaus kann der Katalysator ein Substrat und eine mit dem Substrat verbundene katalytische Schicht, insbesondere katalytische Beschichtung aufweisen. Das Substrat kann in der Art eines (festen) Katalysatorträgerkörpers, beispielsweise mittels eines keramischen oder metallischen Monoliths gebildet sein. Alternativ oder kumulativ kann das Substrat Pellets oder Kügelchen umfassen. Bei dem Substrat kann es sich beispielsweise um eine insbesondere für das Abgas durchströmbare Kanäle ausbildende Struktur handeln. Die Struktur kann metallisch oder keramisch sein. Bevorzugt handelt es sich bei der Struktur um eine insbesondere keramische oder metallische Wabenstruktur. Wenn der Katalysator ein Substrat aufweist, beziehen sich die obigen Gewichtsprozentangaben grundsätzlich auf die darauf befindliche katalytische Schicht bzw. Beschichtung und nicht auf das Gesamtgewicht inklusive Substrat.

Die Verwendung des Katalysators eignet sich insbesondere zur Nachbehandlung eines Abgases eines Kaffeeröstprozesses.

Bei einem Kaffeeröstprozess werden Kaffeebohnen einer großen Hitze ausgesetzt (also geröstet), um ihre Aromastoffe zu lösen. Dies erfolgt insbesondere in einer trockenen oder wasserdampfhaltigen Umgebung bei Temperaturen von ca. 100 °C bis ca. 500 °C (Rösttemperatur) über eine vorgegebene Zeit von beispielsweise 2 bis 20 min. Die während der Röstung entstehenden Gase werden einer Abgasnachbehandlung unterzogen, wobei bevorzugt der hier vorgeschlagenen Katalysator verwendet wird.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigt schematisch:

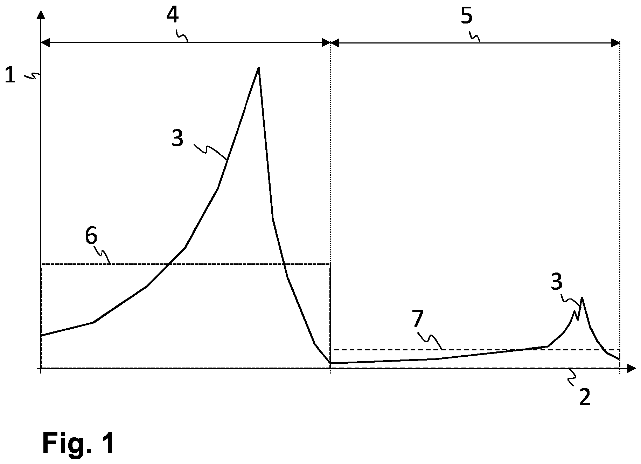

- Fig. 1:: eine Veranschaulichung einer Reduzierung der Stickoxid-Emission in Kaffee-Röstabgasen, die mit der hier vorgeschlagenen Lösung erzielt werden konnte.

Fig. 1 zeigt schematisch eine Veranschaulichung einer Reduzierung der Stickoxid-Emission in Kaffee-Röstabgasen, die mit der hier vorgeschlagenen Lösung erzielt werden konnte. Hierbei ist die NOx-Konzentration 1 über der Zeit 2 aufgetragen. Die Veranschaulichung zeigt einen Verlauf 3 der NOx-Konzentration über der Zeit.

Die Veranschaulichung gemäß Fig. 1 betrifft ein Abgasmessergebnis bei einem Versuch, für den als Röstvorrichtung ein Trommelröster verwendet wurde, bei dem die Röstdauer jeweils zwölf Minuten betragen hat und bei dem als Bohnenart eine Robusta-Bohne verwendet wurde.

Es wurden zwei Röstvorgänge durchgeführt, die jeweils eine Röstdauer von zwölf Minuten aufwiesen. Während der ersten Röstdauer 4 wurden die Röstabgase mit einem herkömmlichen Oxidationskatalysator behandelt. Während der zweiten Röstdauer 5 wurden die Röstabgase zusätzlich unter Verwendung der hier vorgeschlagenen Lösung behandelt (und mit dem Oxidationskatalysator nachbehandelt).

Während der ersten Röstdauer 4 konnte eine erste mittlere NOx-Konzentration 6 von ca. 500 mg/Nm³ gemessen werden. Während der zweiten Röstdauer 5 konnte eine zweite mittlere NOx-Konzentration 7 von ca. 100 mg/Nm³ gemessen werden. Somit konnte die hier vorgeschlagenen Lösung zu einer deutlichen Reduzierung der Stickoxid-Emission (hier um ca. 80%) beitragen.

Der dazu verwendete, beispielhafte Katalysator umfasste:
- als erste Komponente: Kupfer und Mangan (ca. 9 Gewichtsprozent);
- als zweite Komponente: Cer (ca. 12 Gewichtsprozent);
- als dritte Komponente: einen Zeolith, nämlich ZSM-5, ein Sauerstoffspeichermaterial und Siliziumoxid (ca. 79 Gewichtsprozent).

Der bei dem Versuch verwendete herkömmliche Oxidationskatalysator weist folgende Merkmale auf: 60 g / ft³ Edelmetallbeladung im Verhältnis 1/2/0 (Pt / Pd / Rh) auf Basismetalloxid.

Hier vorgeschlagen wird (somit) eine Verwendung eines Katalysators zur selektiven katalytischen Oxidation von stickstoffhaltigen organischen Verbindungen im Abgas einer Kaffeeröstvorrichtung, welche die mit Bezug auf den Stand der Technik geschilderten Probleme zumindest teilweise löst. Insbesondere wird eine Verwendung eines Katalysators zur selektiven katalytischen Oxidation von stickstoffhaltigen organischen Verbindungen im Abgas einer Kaffeeröstvorrichtung angegeben, die zumindest dazu beiträgt, dass eine katalytische Umsetzung der stickstoffhaltigen organischen Verbindungen aus der Abluft von Röstprozessen möglichst ohne Bildung von Stickoxiden und ohne Zusatz eines Reduktionsmittels, wie etwa Harnstoff oder Ammoniak möglich ist.

### Bezugszeichenliste

- 1: NOx-Konzentration
- 2: Zeit
- 3: Verlauf
- 4: erste Röstdauer
- 5: zweite Röstdauer
- 6: erste mittlere NOx-Konzentration
- 7: zweite mittlere NOx-Konzentration

## Patentansprüche

1. Verwendung eines Katalysators zur selektiven katalytischen Oxidation von stickstoffhaltigen organischen Verbindungen zur Nachbehandlung eines Abgases eines Kaffeeröstprozesse, wobei die Bildung von Stickoxiden im Abgas zumindest teilweise unterbunden wird, wobei der Katalysator umfasst:
- eine erste Komponente, umfassend zumindest ein Element der Gruppe bestehend aus Kupfer, Mangan, Eisen oder eine Mischung davon, wobei die erste Komponente 1 bis 15 Gewichtsprozent des Katalysators bildet;
- eine zweite Komponente, umfassend Cer, wobei die zweite Komponente 2 bis 25 Gewichtsprozent des Katalysators bildet; und
- eine dritte Komponente, umfassend zumindest ein Element der Gruppe bestehend aus einem Zeolith, einem Sauerstoffspeichermaterial, einem anorganischen Oxid oder eine Mischung davon, wobei die dritte Komponente 5 bis 95 Gewichtsprozent des Katalysators bildet.

2. Verwendung nach Anspruch 1, wobei die dritte Komponente einen Zeolith umfasst.

3. Verwendung nach Anspruch 2, wobei der Zeolith einer aus der Gruppe bestehend aus EMC-2, Beta-Zeolith, Mordenit, Faujasit, AIPO-5, Theta-1, ZSM-Zeolith, MCM-Zeolith, Ferrierit oder eine Mischung davon ist.

4. Verwendung nach einem der vorhergehenden Ansprüche, wobei das Abgas ohne Additiv mit dem Katalysator verwendet wird.

5. Verwendung nach einem der vorhergehenden Ansprüche, wobei zusätzlich und nachfolgend zu dem Katalysator zur selektiven katalytischen Oxidation ein Oxidationskatalysator verwendet wird.

## Claims

1. Use of a catalyst for the selective catalytic oxidation of nitrogen-containing organic compounds for the aftertreatment of an exhaust gas from a coffee roasting process, wherein the formation of nitrogen oxides in the exhaust gas is at least partially prevented, wherein the catalyst comprises:
- a first component comprising at least one element selected from the group consisting of copper, manganese, iron or a mixture thereof, said first component constitutes from 1 to 15 weight percent of the catalyst;
- a second component comprising cerium, wherein the second component constitutes from 2 to 25 weight percent of the catalyst; and
- a third component comprising at least one member of the group consisting of a zeolite, an oxygen storage material, an inorganic oxide or a mixture thereof, wherein the third component constitutes 5 to 95 weight percent of the catalyst.

2. Use according to claim 1, wherein the third component comprises a zeolite.

3. Use according to claim 2, wherein the zeolite is one of the group consisting of EMC-2, beta-zeolite, mordenite, faujasite, AIPO-5, theta-1, ZSM zeolite, MCM zeolite, ferrierite or a mixture thereof.

4. Use according to any one of the preceding claims, wherein the exhaust gas is used without additive with the catalyst.

5. Use according to any one of the preceding claims, wherein an oxidation catalyst is used in addition to and downstream of the selective catalytic oxidation catalyst.

## Revendications

1. Utilisation d'un catalyseur pour l'oxydation catalytique sélective de composés organiques azotés pour le post-traitement d'un gaz d'échappement d'un processus de torréfaction du café, en empêchant au moins partiellement la formation d'oxydes d'azote dans le gaz d'échappement, le catalyseur comprenant :
- un premier composant comprenant au moins un élément du groupe constitué du cuivre, du manganèse, du fer ou d'un mélange de ceux-ci, le premier composant constituant de 1 à 15 % en poids du catalyseur ;
- un deuxième composant comprenant du cérium, le deuxième composant constituant de 2 à 25 % en poids du catalyseur ; et
- un troisième composant comprenant au moins un élément du groupe constitué d'une zéolithe, d'un matériau de stockage d'oxygène, d'un oxyde inorganique ou d'un mélange de ceux-ci, le troisième composant constituant de 5 à 95 % en poids du catalyseur.

2. Utilisation selon la revendication 1, dans laquelle le troisième composant comprend une zéolithe.

3. Utilisation selon la revendication 2, dans laquelle la zéolithe est une zéolithe choisie dans le groupe constitué par EMC-2, bêta-zéolithe, mordénite, faujasite, AIPO-5, thêta-1, zéolithe ZSM, zéolithe MCM, ferriérite ou un mélange de celles-ci.

4. Utilisation selon l'une quelconque des revendications précédentes, dans laquelle le gaz d'échappement est utilisé sans additif avec le catalyseur.

5. Utilisation selon l'une quelconque des revendications précédentes, dans laquelle un catalyseur d'oxydation est utilisé en plus et ultérieurement au catalyseur d'oxydation catalytique sélective.
